# EUROPEAN PATENT APPLICATION

(11) **EP 2 615 861 A1**
(43) Date of publication of application: **17.07.2013**
(21) Application number: 11823540.7
(22) Date of filing: 05.09.2011
(51) Int. Cl.: H04W 8/00, H04W 84/10

(54) **INFORMATION PROCESSING DEVICE**

(30) Priority: 09.09.2010 JP 2010202492
(71) Applicant: Fujitsu Limited, Kawasaki-shi, Kanagawa 211-8588 (JP); NTT DoCoMo, Inc., Tokyo 100-6150 (JP)
(72) Inventor: TAKAKI, Kazuyuki, Kawasaki-shi Kanagawa 211-8588 (JP); ITO, Masayasu, Osaka-shi Osaka 540-0001 (JP); NAKATSUCHI, Masaharu, Tokyo 100-6150 (JP); SUZUKI, Toshiyuki, Tokyo 100-6150 (JP)
(74) Representative: Fenlon, Christine Lesley
(86) International application number: PCT/JP2011/070196
(87) International publication number: WO 2012/033065

(57) **Abstract**

An information processing apparatus (1) includes a storage unit (6) that stores an application program preliminarily correlated with first category information and first specific information; a search instruction broadcasting unit (2) that broadcasts a search instruction when the information processing apparatus (1) operating according to the application program uses radio communication under a standardized near field radio communication scheme; a device information receiving unit (3) that receives second category information and second specific information from a counterpart device responding to the broadcasted search instruction and correlates the received information with address information; a buffer unit (5) that stores and correlates the received second category information and the received second specific information with the address information; and a counterpart device identifying unit (4) that identifies in the second category information and the second specific information stored in the buffer unit (5), second category information and second specific information corresponding to the first category information and the first specific information and that using the address information correlated with the identified second category information and the identified second specific information, identifies a counterpart device.

## Description

### TECHNICAL FIELD

The present invention relates to an information processing apparatus.

### BACKGROUND ART

An information processing apparatus capable of executing radio communication in a standardized near field radio communication scheme has conventionally been present. An example of the standardized near field radio communication scheme can be, for example, Bluetooth (a registered trademark, IEEE 802.15.1).

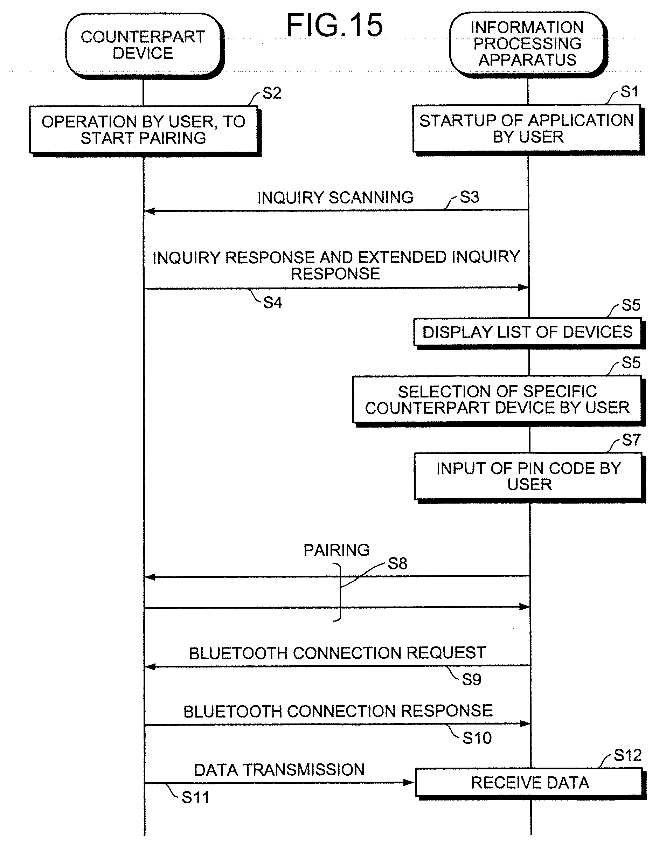

FIG. 15 is a sequence diagram of a procedure for conventional connection using Bluetooth. As depicted in FIG. 15, in a connection process using Bluetooth executed between an information processing apparatus and a counterpart device, a user first starts up an application in the information processing apparatus (step S1) and executes an operation to start pairing at the counterpart device (step S2). When the application is started up in the information processing apparatus, the information processing apparatus executes an inquiry scan (step S3). In response, the counterpart device sends an inquiry response and an extended-version inquiry response (extended inquiry response) to the information processing apparatus (step S4). A list of devices that send the responses is displayed on a monitor of the information processing apparatus (step S5).

The user selects a specific counterpart device from the list (step S6) and inputs a personal identification number (PIN) code of the selected counterpart device (step S7). The input of the PIN code may be unnecessary depending on the version of Bluetooth. Thereby, pairing is completed between the information processing apparatus and the counterpart device (step S8). When the pairing is completed, a Bluetooth connection request is issued and a response thereto is sent between the information processing apparatus and the counterpart device and thereby, a connection is established (steps S9 and S10). The counterpart device transmits data via communication according to Bluetooth (step S11) and the information processing apparatus receives the data (step S12).

According to another method, a user of an information processing apparatus causes radio communication according to Bluetooth to be started between the information processing apparatus and a counterpart device without executing an operation to cause the information processing apparatus to execute an inquiry scan or an operation to select a specific device from among devices that send inquiry responses. For example, according to the method, an electromagnetic wave emitted from a reader/writer of the information processing apparatus is received by a reader/writer of the counterpart device; the counterpart device notifies the information processing apparatus of device information of the counterpart device; whereby, synchronization for the Bluetooth communication is established and communication according to Bluetooth is established. According to this method, the user only has to bring the information processing apparatus close to the counterpart device.

Patent Document 1: Published Japanese-Translation of PCT Application, Publication No. 2003-034660

### DISCLOSURE OF INVENTION

### PROBLEM TO BE SOLVED BY THE INVENTION

However, according to the conventional method, a reader/writer is necessary for both the information processing apparatus and the counterpart device. Therefore, a problem arises in that the information processing apparatus and the counterpart device are both expensive. The receiving reader/writer and the transmitting reader/writer need to be brought close to each other within a distance that enables the receiving reader/writer to receive the electromagnetic wave emitted from the transmitting reader/writer. The distance enabling the reception of the electromagnetic wave radiated from the reader/writer is significantly shorter than the distance that enables communication according to Bluetooth. Therefore, another problem arises in that the range of use of the information processing apparatus and the counterpart device is limited.

An object is to provide a low cost information processing apparatus. A further object is to provide an information processing apparatus that can provide a low cost counterpart device. A still further object is to provide an information processing apparatus that enables the information processing apparatus and a counterpart device to be used in their original range of use.

### MEANS FOR SOLVING PROBLEM

An information processing apparatus is an apparatus capable of executing radio communication under a standardized near field radio communication scheme and includes a storage unit, a search instruction broadcasting unit, a device information receiving unit, a buffer unit, and a counterpart device identifying unit. The storage unit stores an application program that causes the information processing apparatus to execute predetermined operations and is preliminarily correlated with first specific information specific to the application program and first category information indicating a predetermined category among categories defined under a standard of the near field radio communication scheme. The search instruction broadcasting unit, when the information processing apparatus, which operates according to a procedure of the application program, uses the radio communication under the standardized near field radio communication scheme, broadcasts using a radio wave conforming to the standard of the near field radio communication scheme, a search instruction standardized under the standard of the near field radio communication scheme and instructing to search for a counterpart device that conforms to the standardized near field radio communication scheme. The device information receiving unit receives from a counterpart device responding to the broadcast search instruction, second category information indicating a category standardized under the standard of the near field radio communication scheme and to which the responding counterpart device belongs, further receives second specific information specific to the responding counterpart device and stored in a data area to extend the standard of the near field radio communication scheme, and further correlates the second category information and the second specific information with address information indicating an address of the responding counterpart device in the radio communication under the near field radio communication scheme. The buffer unit temporarily stores the second category information and the second specific information correlated with the address information. The counterpart device identifying unit identifies in the second category information and the second specific information stored in the buffer unit, second category information and second specific information that correspond to the first category information and the first specific information preliminarily correlated with the application program, and using the address information correlated with the identified second category information and the identified second specific information, the counterpart device identifying unit identifies a counterpart device of the radio communication used by the information processing apparatus, which operates according to a procedure of the application program.

### EFFECT OF THE INVENTION

A low cost information processing apparatus can be provided. An information processing apparatus can be provided that can provide a low cost counterpart device.
An information processing apparatus can be acquired that enables the information processing apparatus and a counterpart device to be used in their original range of use.

### BRIEF DESCRIPTION OF DRAWINGS

FIG. 1 is a block diagram of an information processing apparatus according to a first example;
FIG. 2 is a block diagram of a hardware configuration of the information processing apparatus according to a second example;
FIG. 3 is a block diagram of a functional configuration of the information processing apparatus according to the second example;
FIG. 4 is a diagram of an example of a data format of an inquiry response according to the second example;
FIG. 5 is a diagram of an example of a data format of an extended inquiry response according to the second example;
FIG. 6 is a diagram of an example of a database according to the second example;
FIG. 7 is a sequence diagram of a procedure for connection using Bluetooth according to the second example;
FIG. 8 is a sequence diagram of a procedure for starting up an application program according to the second example;
FIG. 9 is a sequence diagram of a procedure for connection using Bluetooth according to a third example;
FIG. 10 is a sequence diagram of a procedure for pairing according to the third example;
FIG. 11 is a sequence diagram of a procedure for pairing according to the third example;
FIG. 12 is a sequence diagram of a procedure for data communication according to the third example;
FIG. 13 is a sequence diagram of a procedure for data communication according to the third example;
FIG. 14 is a sequence diagram of a procedure for data communication according to the third example; and
FIG. 15 is a sequence diagram of a procedure for conventional connection using Bluetooth.

### BEST MODE(S) FOR CARRYING OUT THE INVENTION

A preferred embodiment of the information processing apparatus will be described below with reference to the accompanying drawings. The information processing apparatus identifies information that corresponds to an application program from category information and specific information received from a counterpart device, and identifies a counterpart device using address information correlated with the identified information. In the description of each of examples below, identical components are given the same reference numerals and redundant description is omitted.

### (First Example)

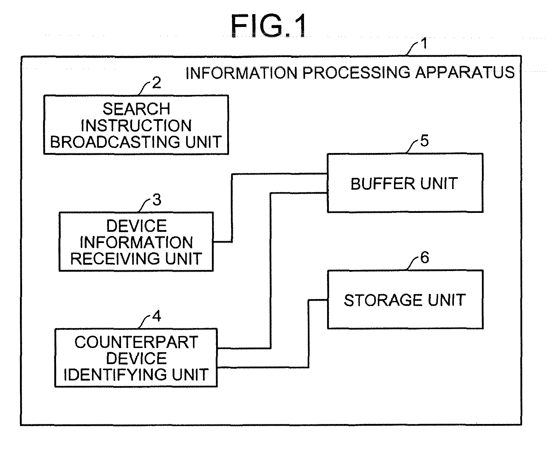

FIG. 1 is a block diagram of an information processing apparatus according to a first example. As depicted in FIG. 1, an information processing apparatus 1 is an apparatus capable of executing radio communication under a standardized near field radio communication scheme. The information processing apparatus 1 includes a search instruction broadcasting unit 2, a device information receiving unit 3, a counterpart device identifying unit 4, a buffer unit 5, and a storage unit 6.

The storage unit 6 stores an application program that causes the information processing apparatus 1 to execute predetermined operations. The application program is correlated in advance with first category information and first specific information. The first category information is information that indicates a predetermined category among categories defined under the standard of the near field radio communication scheme. The first specific information is information specific to the application program.

The search instruction broadcasting unit 2 broadcasts a search instruction when the information processing apparatus 1, which operates according to a procedure of the application program, uses radio communication under the standardized near field radio communication scheme. In this case, the search instruction broadcasting unit 2 broadcasts a search instruction using a radio wave that conforms to the standard of the near field radio communication scheme. The search instruction is an instruction to search for a counterpart device that conforms to the standardized near field radio communication scheme. The search instruction is an instruction that is standardized under the standard of the near field radio communication scheme.

The device information receiving unit 3 receives from a counterpart device that responds to the broadcast search instruction, second category information and second specific information, and correlates the received information with address information. The second category information is information indicating among the categories standardized under the standard of the near field radio communication scheme, the category that the counterpart device belongs to. The second specific information is stored in a data area to extend the standard of the near field radio communication scheme and is specific to the counterpart device. The address information is information that indicates the address of the counterpart device in the radio communication under the near field radio communication scheme.

The buffer unit 5 temporarily stores the received second category information and the received second specific information, correlating the received information with the address information.

The counterpart device identifying unit 4 identifies among the second category information and the second specific information stored in the buffer unit 5, second category information and second specific information that correspond to the first category information and the first specific information correlated in advance with the application program. The counterpart device identifying unit 4 uses the address information correlated with the identified second category information and the identified second specific information and identifies the counterpart device of the radio communication used by the information processing apparatus 1 that operates according to the procedure of the application program.

According to the first example, the information processing apparatus 1 identifies from among the second category information and the second specific information received from the counterpart devices that respond to the search instruction, information that corresponds to the first category information and the first specific information correlated with the application program; and uses the address information correlated with the identified information to identify the counterpart device. Therefore, even when the information processing apparatus includes no reader/writer, the counterpart device notifies the information processing apparatus of device information of the counterpart device, whereby a low cost information processing apparatus can be implemented. Even if the counterpart device includes no reader/writer, the counterpart device notifies the information processing apparatus of the device information of the counterpart device and therefore, an information processing apparatus can be implemented that can provide a low cost counterpart device. The information processing apparatus 1 broadcasts the search instruction using a radio wave that conforms to the standard of the near field radio communication scheme and the counterpart device sends the device information of the counterpart device using a radio wave that conforms to the standard of the near field radio communication scheme. If the range of the radio wave conforming to the standard of the near field radio communication scheme is greater than the range of the electromagnetic wave emitted from the reader/writer, the information processing apparatus 1 and the counterpart device can be further away from each other beyond the distance within which the electromagnetic wave emitted from the reader/writer is receivable. Therefore, an information processing apparatus can be implemented that enables the information processing apparatus and the counterpart device to be used in their original range of use.

### (Second Example)

In a second example, the information processing apparatus according to the first example is applied to Bluetooth, which is one near field radio communication scheme standard. Therefore, the counterpart device is also a device that conforms to Bluetooth.

The first category information may be, for example, information of the counterpart device when the application program is directed to a specific counterpart device and may indicate a major device class and a minor device class that are defined according to Bluetooth. Various types of devices are set in the major device class such as, for example, a computer, a telephone, an audio/video device, and a health device. A minor device class is set for each device that is set in the major device class. For example, various types of devices such as, for example, a blood pressure gauge, a clinical thermometer, and a weigh scale are set in the minor device class of the health device.
The first specific information may be, for example, the name of a manufacturer and the product name of the counterpart device acquired when the application program is directed to a specific counterpart device.

The second category information may be, for example, the information concerning a major device class and a minor device class defined according to Bluetooth and to which the counterpart device belongs. The information that concerns the major device class and the minor device class and that is the second category information may be included in an inquiry response (Inquiry Response) from the counterpart device to respond to a search instruction. The second specific information may be, for example, the name of a manufacturer and the product name of the counterpart device. The name of the manufacturer and the product name of the counterpart device that are the second specific information may be included in an extended inquiry response (Extended Inquiry Response) from the counterpart device in response to a search instruction. The address information may be, for example, a Bluetooth address that represents the address of the counterpart device under the radio communication according to Bluetooth.

### ·Description of Hardware Configuration of Information Processing Apparatus

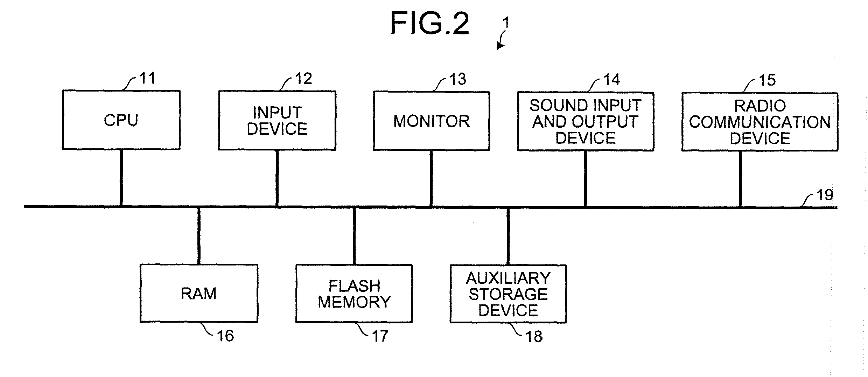

FIG. 2 is a block diagram of a hardware configuration of the information processing apparatus according to the second example. As depicted in FIG. 2, the information processing apparatus 1 includes a central processing unit (CPU) 11, an input device 12, a monitor 13, a sound input and output device 14, a radio communication device 15, a random access memory (RAM) 16, a flash memory 17, and an auxiliary storage device 18, respectively connected by a bus 19.

The CPU 11 executes software such as an operating system (OS), middleware, and application programs and controls the information processing apparatus 1. The input device 12 is a device to input data into the information processing apparatus 1 by user operation such as a keyboard, a button, a switch, and a pointing device. The monitor 13 includes, for example, a displaying device such as a liquid crystal display panel and a processor that executes image processing. The sound input and output device 14 includes, for example, a microphone, a speaker, and a processor that executes sound processing. The radio communication device 15 is connected, by radio communication, to a network such as a mobile telephone network or a local area network (LAN). The RAM 16 is used as a work area of the CPU 11. The flash memory 17 has stores software such as the OS, the middleware, and the application programs. The auxiliary storage device 18 includes various types of memory such as an SD Memory Card (a registered trademark) and a driving device that controls the reading and writing of data with respect to the memory.

### ·Description of Functional Configuration of Information Processing Apparatus

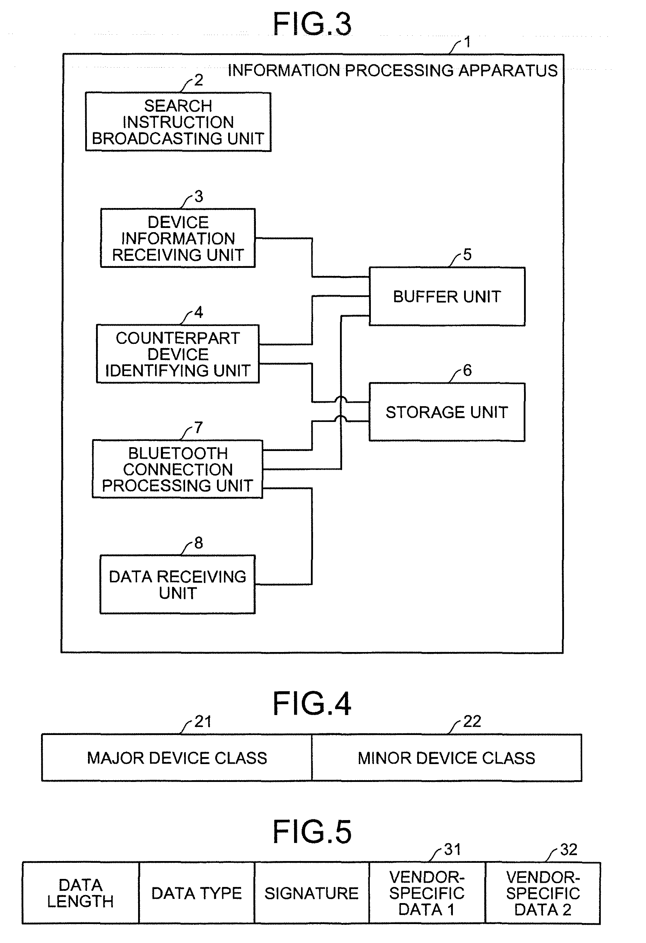

FIG. 3 is a block diagram of a functional configuration of the information processing apparatus according to the second example. As depicted in FIG. 3, the information processing apparatus 1 includes a Bluetooth connection processing unit 7 and a data receiving unit 8 in addition to the configuration of the information processing apparatus of the first example depicted in FIG. 1.

The buffer unit 5 retains a database concerning counterpart devices that responds to a search instruction. The device information receiving unit 3 registers, for example, information concerning the major device class, the minor device class, the name of the manufacturer, and the product name into the database, for each counterpart device based on the inquiry response and the extended inquiry response from the counterpart device that responds to a search instruction.

The counterpart device identifying unit 4 refers to the database and identifies information concerning the major device class and the minor device class (the second category information) and the name of the manufacturer and the product name (the second specific information) of the counterpart device. At this time, the counterpart device identifying unit 4 identifies information that matches the information concerning the major device class and the minor device class (the first category information) as well as the name of the manufacturer and the product name (the first specific information) that are correlated with the application program for a specific counterpart device under execution. The counterpart device identifying unit 4 uses the Bluetooth address that is correlated with the identified information concerning the major device class and the minor device class (the second category information) and the identified information concerning the name of the manufacturer and the product name (the second specific information) to refer to the database and identify a counterpart device of the radio communication used by the information processing apparatus 1, which operates according to the procedure of the application program currently under execution.

After the pairing is completed between the information processing apparatus 1 and the counterpart device, the Bluetooth connection processing unit 7 processes, according to Bluetooth, the radio connection between the information processing apparatus 1 and the counterpart device. The Bluetooth connection processing unit 7 processes the start-up of the application program for the counterpart device. After the radio connection according to Bluetooth is established between the information processing apparatus 1 and the counterpart device, the data receiving unit 8 receives data transmitted from the counterpart device. The rest of the configuration is identical to that of the first example.

The buffer unit 5 may be realized by the RAM 16. The storage unit 6 may be realized by, for example, the flash memory 17 or the auxiliary storage device 18. The search instruction broadcasting unit 2, the device information receiving unit 3, and the counterpart device identifying unit 4 may be implemented by the reading of a program from the flash memory 17 or the auxiliary storage device 18, to execute a Bluetooth connection procedure (described later) by the radio communication device 15 and the CPU 11; and by the execution of the program, using the RAM 16 as a work area. The Bluetooth connection processing unit 7 and the data receiving unit 8 may be implemented by the reading of a program from the flash memory 17 or the auxiliary storage device 18, to execute an application program start-up procedure (described later) by the radio communication device 15 and the CPU 11; and by the execution of the program, using the RAM 16 as a work area.

### ·Description of Data Format of Inquiry Response

FIG. 4 is a diagram of an example of a data format of an inquiry response according to the second example. The inquiry response may include, for example, information concerning a Bluetooth address and a class of device/service (CoD) as the information concerning the counterpart device. As depicted in FIG. 4, the class of device/service may includes fields for a major device class 21 and a minor device class 22 and the respective fields may have a value of a device or a service entered therein. Values of the devices and the services are determined in advance according to Bluetooth standards.

### ·Description of Data Format of Extended Inquiry Response

FIG. 5 is a diagram of an example of a data format of an extended inquiry response according to the second example. The extended inquiry response may include, for example, a Bluetooth address and detailed information concerning a vendor and a product (Manufacturer Specific Data (MSD)) as the information concerning the counterpart device. As depicted in FIG. 5, the detailed information concerning the vendor and the product may include fields for, for example, the data length, the data type, a signature, vendor-specific data 1_31, and vendor-specific data 2_32. For example, the field for the vendor-specific data 1_31 may have the manufacturer's name entered therein. For example, the field for the vendor-specific data 2_32 may have the product name entered therein.

### ·Description of Database

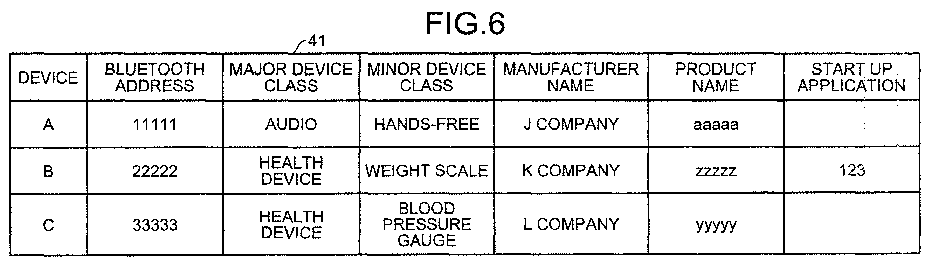

FIG. 6 is a diagram of an example of a database according to the second example. As depicted in FIG. 6, a database 41 may employ a Bluetooth address as an index key and include, for example, information concerning the major device class, the minor device class, the manufacturer name, the product name, and the application program to be started up, for each device. FIG. 6 depicts an example of a case where responses to inquiry scanning are sent from, for example, three devices of "A", "B", and "C".

### ·Description of Procedure for Connection Using Bluetooth

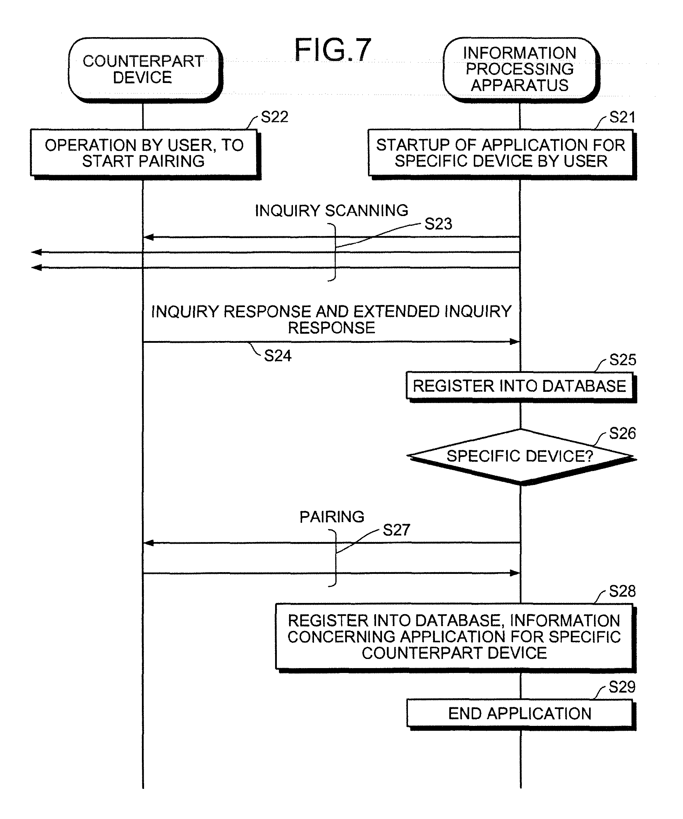

FIG. 7 is a sequence diagram of a procedure for connection using Bluetooth according to the second example. As depicted in FIG. 7, in a connection process executed between the information processing apparatus 1 and the counterpart device using Bluetooth, the user first starts up in the information processing apparatus 1, an application program for a specific device (step S21) and executes an operation to start the pairing at counterpart devices (step S22).

When the application program is started up in the information processing apparatus 1, the search instruction broadcasting unit 2 broadcasts a search instruction and executes inquiry scanning (Inquiry) (step S23). In response, counterpart devices each send an inquiry response and an extended inquiry response to the information processing apparatus 1 (step S24). As described, the inquiry response and the extended inquiry response may each include the information concerning the Bluetooth address, the major device class, the minor device class, the manufacturer's name, and the product name of the counterpart device.

The device information receiving unit 3 receives the inquiry responses and the extended inquiry responses from the counterpart devices. The device information receiving unit 3, using the Bluetooth address as an index key, registers into the database 41 retained by the buffer unit 5, for example, the information concerning the major device class, the minor device class, the manufacturer's name, and the product name, for each of the counterpart devices (step S25).

The counterpart device identifying unit 4 determines whether a specific counterpart device corresponding to the application program under execution for a specific device is included among the counterpart devices that have sent an inquiry response and an extended inquiry response (step S26). For example, the counterpart device identifying unit 4 may determine whether a corresponding specific counterpart device is included by acquiring from the storage unit 6, device information that concerns the major device class, the minor device class, the manufacturer's name, and the product name, and that is correlated with the currently executed application program; and determining whether device information that matches the device information concerning the major device class, the minor device class, the manufacturer's name, and the product name acquired from the storage unit 6 is included in the device information registered in the database 41. If the counterpart device identifying unit 4 determines that matching device information is registered in the database 41, the counterpart device identifying unit 4 identifies the device information that matches therewith, confirming that a specific counterpart device is present that corresponds to the currently executed application program.

The counterpart device identifying unit 4 acquires the Bluetooth address correlated with the identified device information from the database 41; identifies based on the acquired Bluetooth address, the counterpart device that corresponds to the currently executed application program, and executes pairing between the information processing apparatus 1 and the identified counterpart device (step S27).

When the pairing is completed, the counterpart device identifying unit 4 registers the information concerning the application program for the specific counterpart device into the database 41 (step S28). For example, the counterpart device identifying unit 4 registers the No. of the currently executed application program for the specific device into a field for "started up application" of a record that is in the database 41 and for the counterpart device for which the pairing has been executed. In the example of FIG. 6, the device B is the counterpart device for which the pairing was executed and the No. of the application program is "123". The information processing apparatus 1 causes the currently executed application program for the specific device to come to an end (step S29).

### ·Description of Procedure for Starting Up Application Program

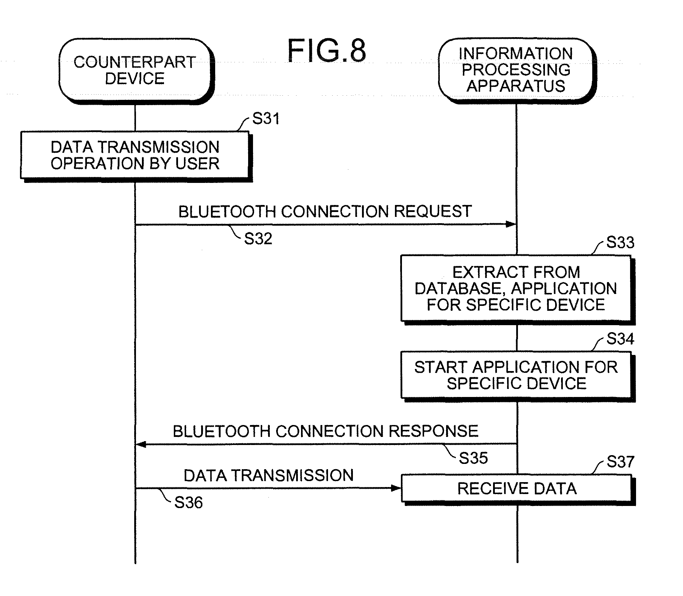

FIG. 8 is a sequence diagram of a procedure for starting up an application program according to the second example. As depicted in FIG. 8, in an automatic application program start-up process executed by the information processing apparatus 1, the user executes an operation in the specific counterpart device to transmit data to the information processing apparatus 1 (step S31). Thereby, the counterpart device notifies the information processing apparatus 1 of the Bluetooth address of the counterpart device and executes a Bluetooth connection request (step S32).

The Bluetooth connection processing unit 7 receives the Bluetooth connection request from the counterpart device; extracts from the database 41, the application program for the specific device that corresponds to the Bluetooth address received from the counterpart device (step S33); and starts up the extracted application program for the specific device (step S34). For example, when the specific counterpart device is the device B in the database 41 depicted in FIG. 6, the Bluetooth connection processing unit 7 extracts and starts up the application program whose No. is "123".

When the application program is started up, the Bluetooth connection processing unit 7 sends a Bluetooth connection response to the counterpart device (step S35). Thereby, the radio connection using Bluetooth is established between the information processing apparatus 1 and the counterpart device. The counterpart device transmits data via communication using Bluetooth (step S36) and the information processing apparatus 1 receives the data (step S37).

According to the second example, effects identical to those of the first example are achieved.

### (Third Example)

In a third example, the information processing apparatus is applied to a mobile device (for example, a mobile telephone) in the second example. An example of the application program for the specific device can be, for example, an application program referred to as an "i-appli" that is executable on a mobile telephone of NTT DoCoMo, Inc. The application program may be an application program that is executable on a mobile telephone of any other communication carrier. The hardware configuration and the functional configuration of the mobile device are identical to those of the information processing apparatus of the second example. In the third example, internal processes of the mobile device will mainly be described according to the hardware, middleware, and application programs of the mobile device.

### ·Description of Procedure for Connection Using Bluetooth

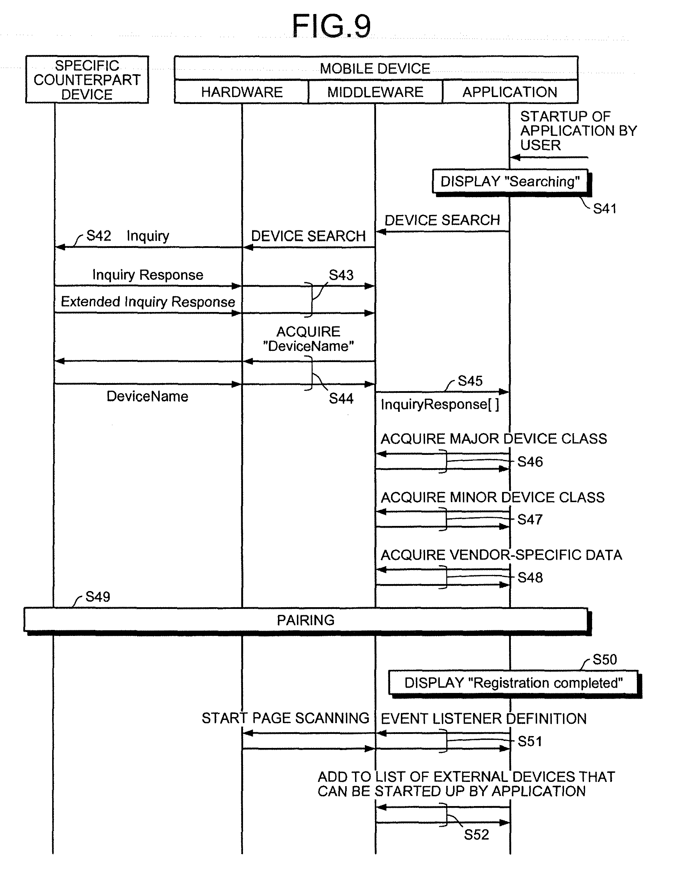

FIG. 9 is a sequence diagram of a procedure for connection using Bluetooth according to the third example. As depicted in FIG. 9, in a connection process using Bluetooth and executed between the mobile device and a counterpart device, the user first starts up in the mobile device, an application program for a specific device. At this step, it is assumed as an example that the application program for the specific device is an application program for a weight scale that is a health device.

The started up application program displays, on a monitor of the mobile device, that the counterpart device is currently being searched for (step S41). The application program sends to the middleware, a message (Bluetooth.searchDevice()) to search for the device. The middleware sends to the hardware, the message to search for the device. The hardware broadcasts an "Inquiry" (step S42).

The counterpart device sends an "Inquiry Response" and "Extended Inquiry Response" to the hardware of the mobile device, in response to the "Inquiry". The hardware sends the "Inquiry Response" and "Extended Inquiry Response" to the middleware (step S43). The middleware sends a message indicating the acquisition of "DeviceName" to the counterpart device through the hardware. The counterpart device sends "DeviceName" to the middleware through the hardware (step S44).

The application program registers into the database, device information concerning the counterpart device that responded. For example, the middleware sends "InquiryResponse[]" to the application program (step S45). The application program sends to the middleware, a message (InquiryResponse.getMajorDeviceClass()) to acquire the major device class and acquires the information concerning the major device class from the middleware (step S46).

The application program sends to the middleware, a message (InquiryResponse.getMinorDeviceClass()) to acquire the minor device class and acquires the information concerning the minor device class from the middleware (step S47). The application program sends to the middleware, a message (InquiryResponse.getManufacturerSpecificData()) to acquire the vendor-specific data (ManufacturerSpecificData) and acquires the vendor-specific data from the middleware (step S48). The vendor-specific data may be, for example, the manufacturer's name and the product name of the counterpart device.

The application program determines based on the information concerning the major device class and the minor device class of the counterpart device, whether the counterpart device is a weight scale that is a health device. The application program determines based on the vendor-specific data, whether the counterpart device is a device to be connected. The mobile device executes the pairing with the counterpart device, based on whether the counterpart device is a device to be connected (step S49). Details of a pairing procedure that is executed when the counterpart device is a device to be connected and a procedure that is executed when the counterpart device is not a device to be connected will be described later. After the pairing is completed, the application program displays, on the monitor of the mobile device, that the registration is completed (step S50).

The application program sends to the middleware, a message (Bluetooth.setBTEventListener(STAR_BLUETOOTH_CONNECT_REQUES T_RECEIVED)) to define the listener of the middleware event. The middleware starts page scanning on the hardware. The hardware sends to the middleware, a response to the page scanning; and the middleware sends to the application program, a response to the definition of the listener (step S51).

The application program sends to the middleware, a message (StarApplicationManager.addRemoteLauncher()) to be added to a list of external devices that can be started up, the list being for the application. In response, the middleware correlates the paired counterpart device with the currently started up application program and stores information concerning the correlation to the database (step S52). Thereby, when the connection request is issued from the counterpart device after the pairing is completed, the mobile device can identify the application program to be started up. The mobile device executes steps S46 to S52 for all the counterpart devices that respond to "Inquiry".

### ·Description of Procedure for Pairing Executed When Counterpart Device Is Device to Be Paired

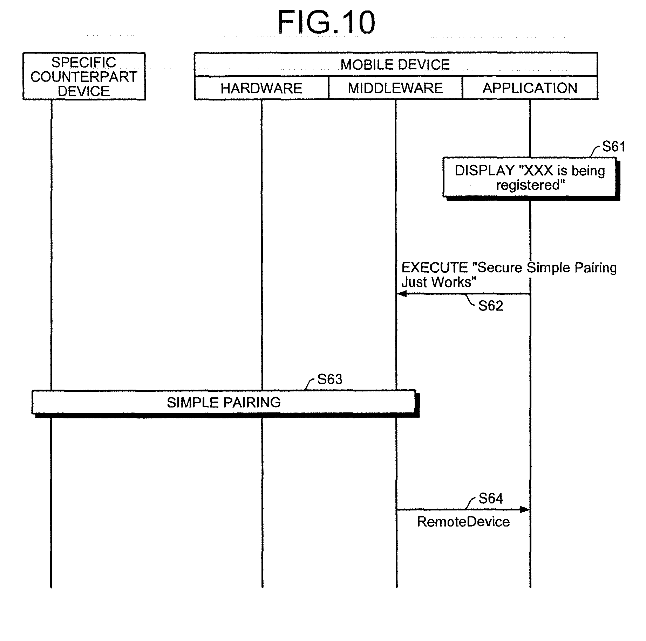

FIG. 10 is a sequence diagram of a procedure for pairing according to the third example. As depicted in FIG. 10, when the counterpart device is the device to be paired, the application program displays, on the monitor of the mobile device, that the counterpart device is currently being registered (step S61). The application program sends to the middleware, a message (Bluetooth.startPairingByJustWorks()) to execute "Secure Simple Pairing Just Works" (step S62). Thereby, simple pairing (Secure Simple Pairing-Just Works) is executed between the mobile device and the counterpart device (step S63). The middleware sends "RemoteDevice" to the application program (step S64).

### ·Description of Procedure for Pairing Executed When Counterpart Device Is Not Device to Be Paired

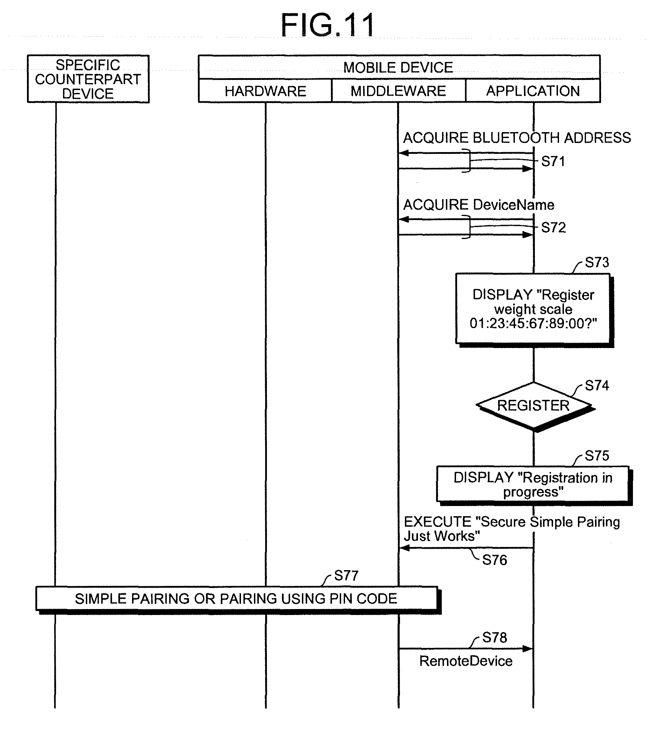

FIG. 11 is a sequence diagram of a procedure for pairing according to the third example. As depicted in FIG. 11, when the counterpart device is not a device to be paired, the application program sends to the middleware, a message (InquiryResponse.getAddress()) to acquire the Bluetooth address and acquires the Bluetooth address from the middleware (step S71). The application program sends to the middleware, a message (InquiryResponse.getDeviceName()) to acquire "DeviceName" and acquires "DeviceName" from the middleware (step S72).

The application program displays, on the monitor of the mobile device, inquiry of whether the counterpart device (for example, the weight scale) is to be registered (step S73). At this step, the Bluetooth address of the counterpart device (for example, the weight scale) may be displayed together on the monitor of the mobile device. If the user selects registration (step S74: REGISTER), the application program displays, on the monitor of the mobile device, that the counterpart device is currently being registered (step S75) and sends to the middleware, a message (Bluetooth.startPairingByJustWorks()) to execute "Secure Simple Pairing Just Works" (step S76).

Thereby, the simple pairing (Secure Simple Pairing-Just Works) or pairing using a pin code (PinCODE) is executed between the mobile device and the counterpart device (step S77). The pairing using a pin code (PinCODE) may be executed when the counterpart device does not support "JustWorks". An input screen for the pin code (PinCODE) may be displayed by the middleware, for example, on the monitor of the mobile device. The middleware sends "RemoteDevice" to the application program (step S78).

### ·Description of Procedure for Data Communication from Counterpart Device Executed When Application Program Is Not Started Up

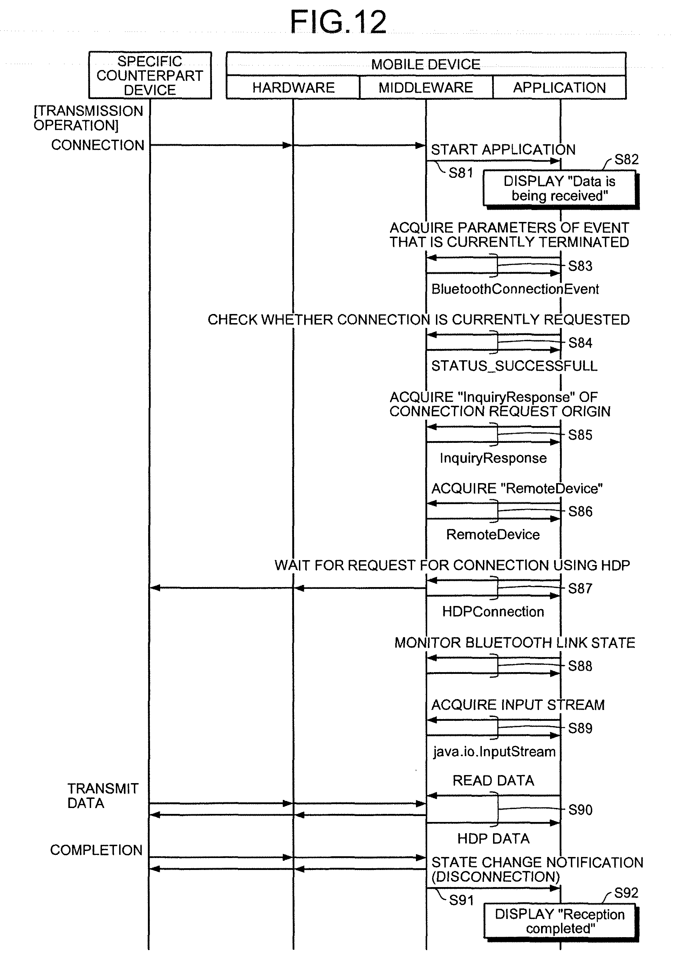

FIG. 12 is a sequence diagram of a procedure for data communication according to the third example. The application program executes in advance "StarApplicationManager.addRemoteLauncher()" and the middleware is starting page scanning. As depicted in FIG. 12, if the application program is not started up and the counterpart device is connected to the hardware of the mobile device through a transmission operation, the middleware determines whether the application program is started up. If the middleware determines that the application program is not started up, the middleware selects from the database, the application program that is correlated with the Bluetooth address of the counterpart device and starts up the application program (step S81).

The started up application program displays, on the monitor of the mobile device, that the data is currently being received (step S82). The mobile device acquires an event that is terminated (Terminated) and checks whether the health device is requesting connection. For example, the application program sends to the middleware, a message ((StarApplicationManager.getPushedEvent(STAR_BLUETOOTH_CONN ECT_REQUEST_RECEIVED))) to acquire parameters of an event that is currently terminated. In response, the middleware sends "BluetoothConnectionEvent" to the application program (step S83). The application program sends to the middleware, a message (BluetoothConnectionEvent.getStatus()) to check whether connection is currently requested. In response, the middleware sends "STATUS_SUCCESSFULL" to the application program (step S84).

The mobile device receives the connection request. For example, the application program sends to the middleware, a message (BluetoothConnectionEvent.getInquiryResponse()) to acquire "InquiryResponse" of the connection request origin. In response, the middleware sends "InquiryResponse" to the application program (step S85). The application program sends to the middleware, a message (Bluetooth.getDiscoveredRemoteDevice()) to acquire "RemoteDevice". In response, the middleware sends "RemoteDevice" to the application program (step S86).

The application program sends to the middleware, a message (RemoteDevice.accept(HDP)) to wait for the request for connection using the HDP. The middleware instructs the counterpart device, through the hardware, to connect using the HDP. The middleware sends "HDPConnection" to the application program (step S87).

The mobile device defines a listener to monitor the state of the link according to Bluetooth. For example, the application program sends to the middleware, a message (BTConnection.setBTStateListener()) to monitor the Bluetooth link state. The middleware sends to the application program, a response to the monitoring of the link state (step S88). The application program sends to the middleware, a message (HDPConnection.openInputStream()) to acquire an input stream. In response, the middleware sends "java.io.InputStream" to the application program (step S89).

The application program sends to the middleware, a message (InputStream.read()) to read data. Thereby, the middleware executes transmission and reception of data with the counterpart device through the hardware. The middleware transmits HDP data to the application program (step S90). The middleware receives transmission end notification from the counterpart device, through the hardware, and sends a response to the counterpart device through the hardware. The middleware sends to the application program, state change notification (stateChanged(DISCONNECT)) indicating disconnection (step S91). Consequently, the application program displays "reception completed" on the monitor of the mobile device (step S92).

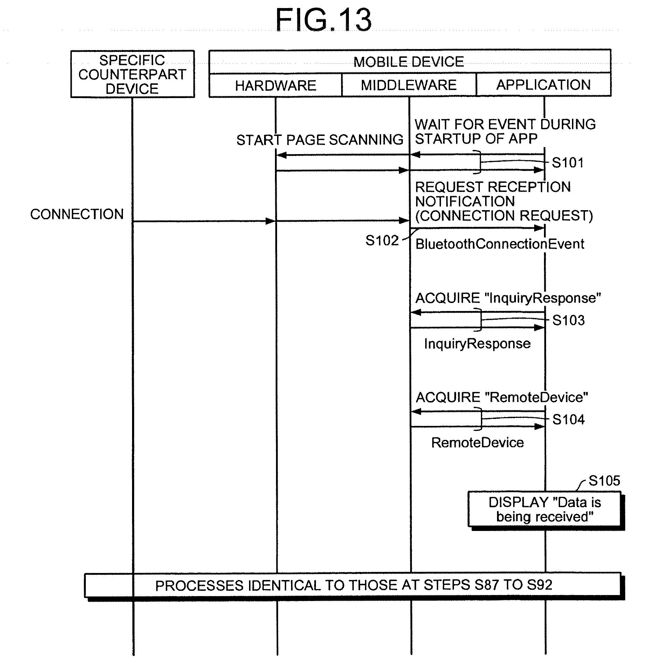

·Description of Procedure for Data Communication from Counterpart Device Executed When Application Program Is Started Up
FIG. 13 is a sequence diagram of a procedure for data communication according to the third example. As depicted in FIG. 13, the application program executes, in advance, listener registration to be able to receive a connection event during start up. For example, the application program sends to the middleware, a message (Bluetooth.setBTEventListener(STAR_BLUETOOTH_CONNECT_REQUES T_RECEIVED)) to wait for an event during startup of an app. The middleware starts page scanning for the hardware. The hardware sends to the middleware, a response to the page scanning. The middleware sends to the application program, a response to the listener registration (step S101).

When the counterpart device is connected to the middleware through the hardware, the mobile device receives a connection request. For example, the middleware sends to the application program, request reception notification (STAR_BLUETOOTH_CONNECT_REQUEST_RECEIVED) for the connection request. The middleware sends "BluetoothConnectionEvent" to the application program. The middleware sends "BTEventListener.requestIndication()" to the application program that executes the listener registration (step S102).

The application program sends to the middleware, a message (BluetoothConnectionEvent.getInquiryResponse()) to acquire "InquiryResponse" of the connection request origin. In response, the middleware sends "InquiryResponse" to the application program (step S103). The application program sends to the middleware, a message (Bluetooth.getDiscoveredRemoteDevice()) to acquire "RemoteDevice". In response, the middleware sends "RemoteDevice" to the application program (step S104). The application program displays, on the monitor of the mobile device, that the data is currently being received (step S105). Thereafter, processes identical to those at steps S87 to S92 are executed.

### ·Description of Procedure for Data Communication from Mobile Device

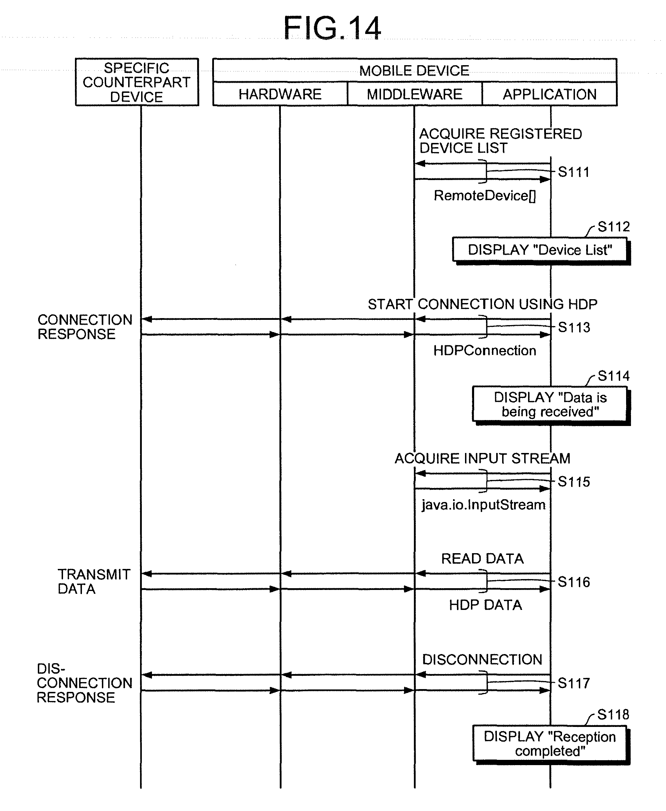

FIG. 14 is a sequence diagram of a procedure for data communication according to the third example. As depicted in FIG. 14, when the connection is established from the mobile device to the counterpart device, the application program sends to the middleware, a message (Blutooth.getDiscoveredRemoteDeviceList()) to acquire a registered device list. In response, the middleware sends "RemoteDevice[]" to the application program (step S111).

Application program displays the device list on the monitor of the mobile device (step S112). At this step, device information such as the device class and the manufacturer's name may be displayed together with the device list. The user selects from the displayed device list, a device to be connected. If the user does not need to select a device, configuration may be such that the device list is not displayed.

The application program sends to the middleware, a message (RemoteDevice.connect(HDP)) to start the connection using the HDP. The middleware instructs the counterpart device, through the hardware, to connect using the HDP. In response, the counterpart device sends a connection response to the middleware through the hardware. The middleware sends "HDPConnection" to the application program (step S113). The application program displays, on the monitor of the mobile device, that the data is currently being received (step S114).

The application program sends to the middleware, a message (HDPConnection.openInputStream()) to acquire an input stream. In response, the middleware sends "java.io.InputStream" to the application program (step S115). The application program sends to the middleware, a message (InputStream.read()) to read the data. Thereby, the middleware executes transmission and reception of data with the counterpart device through the hardware. The middleware transmits the HDP data to the application program (step S116).

The application program sends a disconnection notification (HDPConnection.close()) to the middleware.
The middleware, through the hardware, notifies the counterpart device of the disconnection; and the counterpart device sends to the mobile device, a response to the disconnection notification (step S117). Thereby, the application program displays "reception completed" on the monitor of the mobile device (step S118).

According to the third example, even if the information processing apparatus is a mobile device such as a mobile telephone, effects identical to those of the first example are achieved.

**EXPLANATIONS OF LETTERS OR NUMERALS**

| | |
|---|---|
| 1 | information processing apparatus |
| 2 | search instruction broadcasting unit |
| 3 | device information receiving unit |
| 4 | counterpart device identifying unit |
| 5 | buffer unit |
| 6 | storage unit |

## Claims

1. An information processing apparatus capable of executing radio communication under a standardized near field radio communication scheme, the information processing apparatus comprising:
a storage unit that stores an application program that causes the information processing apparatus to execute predetermined operations and is preliminarily correlated with first specific information specific to the application program and first category information indicating a predetermined category among categories defined under a standard of the near field radio communication scheme;
a search instruction broadcasting unit that when the information processing apparatus, which operates according to a procedure of the application program, uses the radio communication under the standardized near field radio communication scheme, broadcasts using a radio wave conforming to the standard of the near field radio communication scheme, a search instruction standardized under the standard of the near field radio communication scheme and instructing to search for a counterpart device that conforms to the standardized near field radio communication scheme;
a device information receiving unit that receives from a counterpart device responding to the broadcast search instruction, second category information indicating a category standardized under the standard of the near field radio communication scheme and to which the responding counterpart device belongs, that receives second specific information specific to the responding counterpart device and stored in a data area to extend the standard of the near field radio communication scheme, and that correlates the second category information and the second specific information with address information indicating an address of the responding counterpart device in the radio communication under the near field radio communication scheme;
a buffer unit that temporarily stores the second category information and the second specific information correlated with the address information; and
a counterpart device identifying unit that identifies in the second category information and the second specific information stored in the buffer unit, second category information and second specific information that correspond to the first category information and the first specific information preliminarily correlated with the application program, and that using the address information correlated with the identified second category information and the identified second specific information, identifies a counterpart device of the radio communication used by the information processing apparatus, which operates according to a procedure of the application program.

2. The information processing apparatus according to claim 1, wherein
the first specific information is a manufacturer name and a product name of the counterpart device of the radio communication used by the information processing apparatus operating according to the procedure of the application program.

3. The information processing apparatus according to claim 1 or 2, wherein
the second specific information is a manufacturer name and a product name of the counterpart device.
